# EUROPÄISCHE PATENTSCHRIFT

(11) **EP 3 855 012 B1**
(45) Veröffentlichungstag und Bekanntmachung des Hinweises auf die Patenterteilung: **03.01.2024**
(21) Anmeldenummer: 20215070.2
(22) Anmeldetag: 17.12.2020
(51) Int. Cl.: F02M 35/08, F02M 35/16, F02M 35/02, B01D 46/00

(54) **LUFTFILTERSYSTEM FÜR EIN NUTZFAHRZEUG**
AIR FILTER SYSTEM FOR A COMMERCIAL VEHICLE
SYSTÈME DE FILTRE À AIR POUR UN VÉHICULE UTILITAIRE

(30) Priorität: 27.01.2020 DE 102020200945
(43) Veröffentlichungstag der Anmeldung: 28.07.2021
(73) Patentinhaber: Deere & Company, Moline, IL 61265 (US)
(72) Erfinder: YUEN, MING PARKER, 68163 Mannheim (DE); SANANIKONE, PHOUPHADETH, 68163 Mannheim (DE); FOERSTER, AXEL, 68163 Mannheim (DE); BERG, ALEXANDER, 68163 Mannheim (DE)
(74) Vertreter: Dehnhardt, Florian Christopher

(56) Entgegenhaltungen:
- DE-A1-102018 131 832
- US-A1- 2015 176 545
- US-B2- 9 463 812
- US-B2- 10 507 419

## Beschreibung

Die Erfindung betrifft ein Luftfiltersystem für ein Nutzfahrzeug, umfassend einen in einem Filtergehäuse untergebrachten einlassseitigen Grobfilter sowie einen in Filterbetriebsrichtung eines zu reinigenden Luftstroms nachgeschalteten Feinfilter.

Ein derartiges Luftfiltersystem für ein mit einem aufgeladenen Dieselmotor ausgestattetes geländegängiges Nutzfahrzeug ist beispielsweise aus der DE 10 2019 003 209 A1 bekannt, bei dem ein Grobfilter zur Vorreinigung von mittels eines Turboladers zu verdichtender Ladeluft sowie ein nachfolgender (mehrstufiger) Feinfilter zur Beseitigung verbleibender Verunreinigungen vorgesehen ist. Grobfilter und Feinfilter sind in einem gemeinsamen Filtergehäuse untergebracht, wobei sich das Filtergehäuse von außen öffnen sowie der Feinfilter zum Zwecke der Reinigung von Hand entnehmen lässt. Die Durchführung des Reinigungsvorgangs ist vergleichsweise umständlich bzw. zeitaufwändig, insbesondere auch aufgrund des Umstands, dass ein freier Zugriff auf das Filtergehäuse infolge beengter Platzverhältnisse im Motorraum meist nicht gegeben ist. Andere Luftfiltersysteme sind aus US 9 463 812 B2, US 2015/176545 A1 und US 10 507 419 B2 bekannt.

Es ist daher Aufgabe der vorliegenden Erfindung, ein hinsichtlich der Durchführung eines Reinigungsvorgangs verbessertes Luftfiltersystem der eingangs genannten Art anzugeben.

Diese Aufgabe wird durch ein Luftfiltersystem für ein Nutzfahrzeug mit den Merkmalen des Patentanspruchs 1 gelöst.

Das Luftfiltersystem für ein Nutzfahrzeug umfasst einen in einem Filtergehäuse untergebrachten einlassseitigen Grobfilter sowie einen in Filterbetriebsrichtung eines zu reinigenden Luftstroms nachgeschalteten Feinfilter, wobei eine in dem Filtergehäuse untergebrachte Reinigungsanordnung zum Ausblasen von zumindest im Feinfilter abgeschiedenen Schmutzpartikeln entgegen der Filterbetriebsrichtung vorhanden ist.

In diesem Fall lässt sich zumindest ein Teil der abgeschiedenen Schmutzpartikel aufgrund des mittels der Reinigungsanordnung beim Ausblasen aufgebauten Luftdrucks von der Filteroberfläche des Feinfilters in Richtung des Grobfilters und von dort in die Umgebung befördern. Dies ermöglicht eine rasche und bequeme Reinigung des Feinfilters, ohne das Filtergehäuse auseinanderzubauen zu müssen. Der solchermaßen durchgeführte Reinigungsvorgang kann insbesondere unmittelbar nach dem Starten des Nutzfahrzeugs vor Aufnahme des eigentlichen Fahrtbetriebs erfolgen, sodass dieser zu keinen nennenswerten Ausfallzeiten bzw. Unterbrechungen im nachfolgenden Betriebsablauf führt.

Vorteilhafte Ausgestaltungen des erfindungsgemäßem Luftfiltersystems gehen aus den Unteransprüchen hervor.

Vorzugsweise weist die Reinigungsanordnung eine in Richtung einer Filteroberfläche des Feinfilters gerichtete Luftauslassdüse auf, die von einer Pressluftquelle speisbar ist. Die geometrischen Eigenschaften der Luftauslassdüse sind derart gewählt, dass diese die Applikation eines flächigen Reinigungsluftstrahls in Richtung der Filteroberfläche ermöglicht. Die Pressluftquelle kann insbesondere Bestandteil eines Pneumatiksystems des Nutzfahrzeugs sein.

Um die Flächenwirkung des Reinigungsluftstrahls weiter zu verbessern, besteht die Möglichkeit, dass die Reinigungsanordnung eine Vielzahl von über die Filteroberfläche verteilt angeordneten Luftauslassdüsen aufweist. Deren räumliche Anordnung kann insbesondere an den Verlauf der Filteroberfläche angepasst sein.

Bei dem Grobfilter kann es sich um einen Zentrifugalluftfilter zur Vorreinigung von aus der Umgebung angesaugter Luft handeln. Im Allgemeinen umfasst der Zentrifugalluftfilter eine Vielzahl von Einzelabscheidern, die einen hindurchtretenden Luftstrom in eine definierte Wirbelbewegung versetzen, sodass im Luftstrom enthaltene Grobpartikel aufgrund der hervorgerufenen Zentrifugalkräfte in einen die Einzelabscheider umgebenden Sammelbereich geschleudert werden. In den Sammelbereich mündet ein an dem Filtergehäuse vorgesehener Anschlussstutzen, über den sich die im Abscheidebereich befindlichen Grobpartikel durch Erzeugung eines Unterdrucks gegenüber der Umgebung nach außen absaugen lassen.

Der Feinfilter weist zur Vergrößerung der wirksamen Filteroberfläche typischerweise ein gefaltetes bzw. plissiertes Filtervlies auf, das in einem Patroneneinsatz untergebracht ist. Der Patroneneinsatz lässt sich durch Öffnen des Filtergehäuses von Hand entnehmen und bei Bedarf durch einen neuen ersetzen. Dies ist unter anderem dann erforderlich, wenn das Filtervlies mit Schmutzpartikeln derart zugesetzt ist, dass mittels der Reinigungsanordnung kein hinreichender Reinigungseffekt mehr erzielbar ist. Wann dies der Fall ist, hängt unter anderem von der Art der Schmutzpartikel und den Umgebungsbedingungen, insbesondere der Luftfeuchtigkeit, ab. Zur Entnahme des Feinfilters bzw. des zugehörigen Patroneneinsatzes ist es denkbar, dass das Filtergehäuse mehrteilig aufgebaut ist und sich bei Bedarf zerlegen lässt.

Weiterhin ist dem Feinfilter innerhalb des Filtergehäuses in Filterbetriebsrichtung redundant ein Sicherheitsfilter nachgeschaltet .

Dieser verhindert, dass Schmutzpartikel, die bei einer Entnahme des Feinfilters möglicherweise ins Filtergehäuse freigesetzt werden, bei Wiederaufnahme des Filterbetriebs in nachgelagerte Komponenten gesaugt werden und diese unter Umständen beschädigen. Bei dem Sicherheitsfilter handelt es sich letztlich ebenfalls um einen Feinfilter, der jedoch fest innerhalb des Filtergehäuses montiert ist.

Die Luftauslassdüse kann in einen zwischen Feinfilter und Sicherheitsfilter ausgebildeten Gehäusekammerbereich in Richtung der Filteroberfläche des Feinfilters münden. Der durch Applizieren des Reinigungsluftstrahls durchführbare Reinigungsvorgang beschränkt sich in diesem Fall ausschließlich auf den Feinfilter sowie gegebenenfalls den Grobfilter. Dies trägt dem Umstand Rechnung, dass eine Reinigung des Sicherheitsfilters aufgrund der Möglichkeit unbemerkt verursachter Beschädigungen bzw. Undichtigkeiten im Falle erhöhter Reinheitsanforderungen unerwünscht ist.

Hierbei ist es möglich, dass sich die Luftauslassdüse durch den Sicherheitsfilter hindurch in den Gehäusekammerbereich erstreckt. Insbesondere kann die Luftauslassdüse baulich in den Sicherheitsfilter integriert sein. Hierzu weist der Sicherheitsfilter ein Kunststoffgehäuse mit einer Durchgangsöffnung zur sitzdichten Aufnahme der Luftauslassdüse auf. Die Unterbringung der Reinigungsanordnung bzw. Luftauslassdüse innerhalb des Filtergehäuses ist in diesem Fall besonders raumsparend möglich, da der Gehäusekammerbereich nicht die gesamte Luftauslassdüse einschließlich einer zugehörigen Druckluftleitung zur Pressluftzufuhr aufnehmen muss und daher entsprechend kompakt ausfallen kann.

Der Vollständigkeit halber sei angemerkt, dass anstelle eines Sicherheitsfilters auch ein weiterer Feinfilter vorgesehen sein kann, der sich ebenfalls mittels der in dem Filtergehäuse untergebrachten Reinigungsanordnung ausblasen lässt. Dieser kann in einem eigenen Patroneneinsatz innerhalb des Filtergehäuses untergebracht sein und ebenfalls ein gefaltetes bzw. plissiertes Filtervlies aufweisen. Die Luftauslassdüse befindet sich in diesem Fall in einem dem weiteren Feinfilter nachgelagerten Gehäusekammerbereich.

Im einfachsten Fall kann die Auslösung des Reinigungsvorgangs durch Betätigung einer die Reinigungsanordnung speisenden Pressluftquelle manuell erfolgen. Um dem Fahrer die Notwendigkeit der Durchführung des Reinigungsvorgangs anzuzeigen, ist es vorstellbar, dass eine Kontrolleinheit eine Fahrerinformationseinheit in Abhängigkeit von Daten einer Zeitablaufsteuerung und/oder einer Filterzustandserfassung ansteuert, um einen entsprechenden Fahrerhinweis auszugeben. Zusätzlich oder alternativ erfolgt die Betätigung der Pressluftquelle auf Grundlage dieser Daten seitens der Kontrolleinheit automatisiert.

Das erfindungsgemäße Luftfiltersystem für ein Nutzfahrzeug wird im Folgenden anhand der beigefügten Zeichnungen näher erläutert. Hierbei sind übereinstimmende bzw. bezüglich ihrer Funktion vergleichbare Komponenten mit denselben Bezugszeichen gekennzeichnet. Es zeigen:
- Fig. 1: eine Gesamtansicht des erfindungsgemäßen Luftfiltersystems in einem Motorraum eines als landwirtschaftlicher Traktor ausgebildeten Nutzfahrzeugs,
- Fig. 2: eine schematische Schnittansicht eines ersten Ausführungsbeispiels des Luftfiltersystems in Fig. 1,
- Fig. 3: eine schematische Schnittansicht eines zweiten Ausführungsbeispiels des Luftfiltersystems in Fig. 1, und
- Fig. 4: eine Aufsichtsdarstellung einer von dem Luftfiltersystem gemäß Fig. 3 umfassten Reinigungsanordnung mit einer Vielzahl von Luftauslassdüsen.

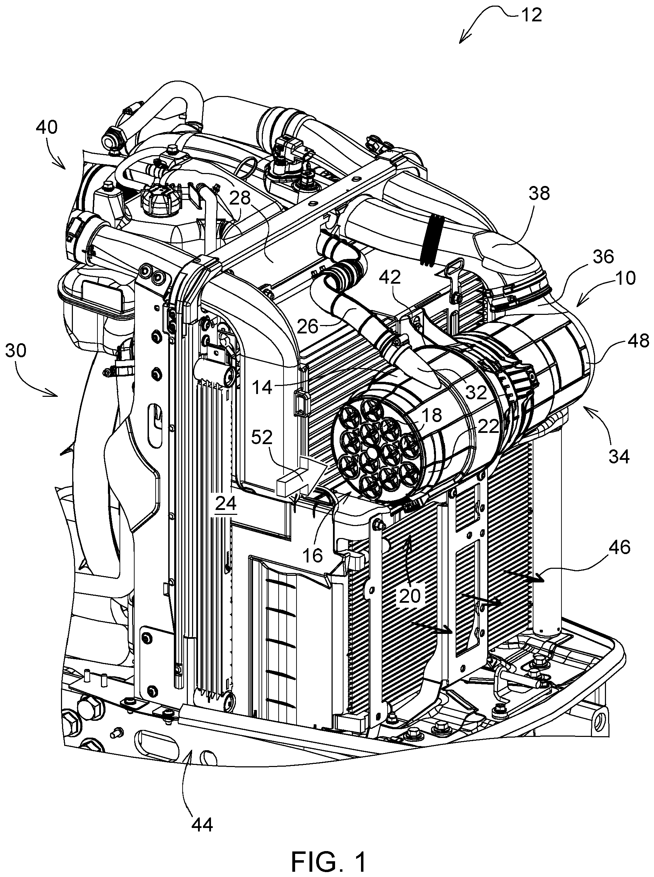

Fig. 1 zeigt eine Gesamtansicht eines Luftfiltersystems 10 in einem Motorraum 12 eines als landwirtschaftlicher Traktor ausgebildeten Nutzfahrzeugs (nicht abgebildet). Der Umstand, dass es sich bei dem Nutzfahrzeug um einen landwirtschaftlichen Traktor handelt, hat hierbei lediglich beispielhaften Charakter, es kann sich ebenso gut auch um ein Nutzfahrzeug beliebiger anderer Bauart aus dem Land-, Forst- oder Baumaschinenbereich handeln.

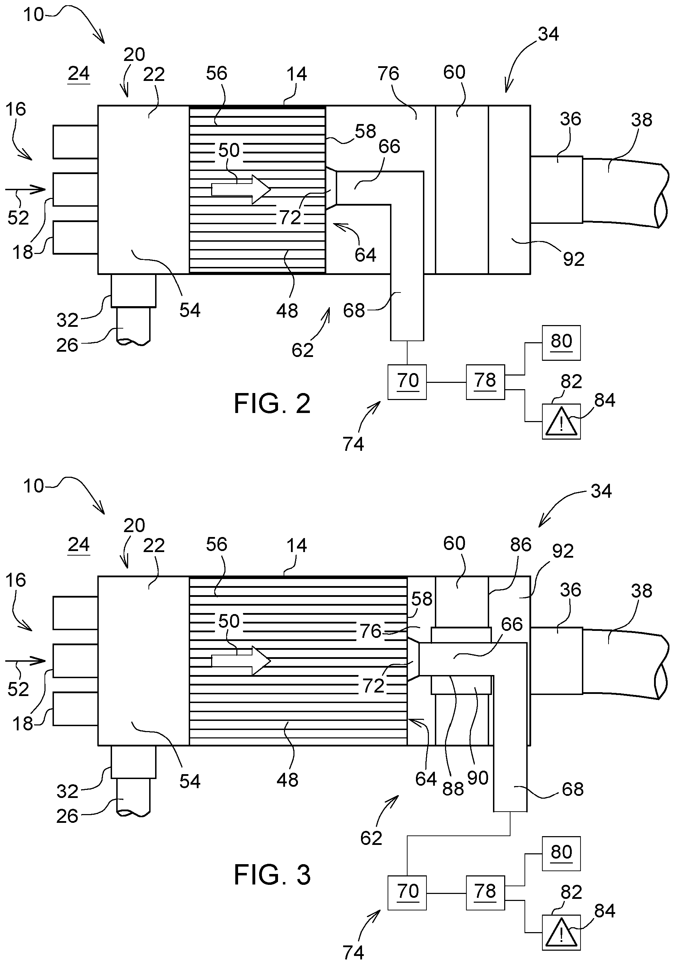

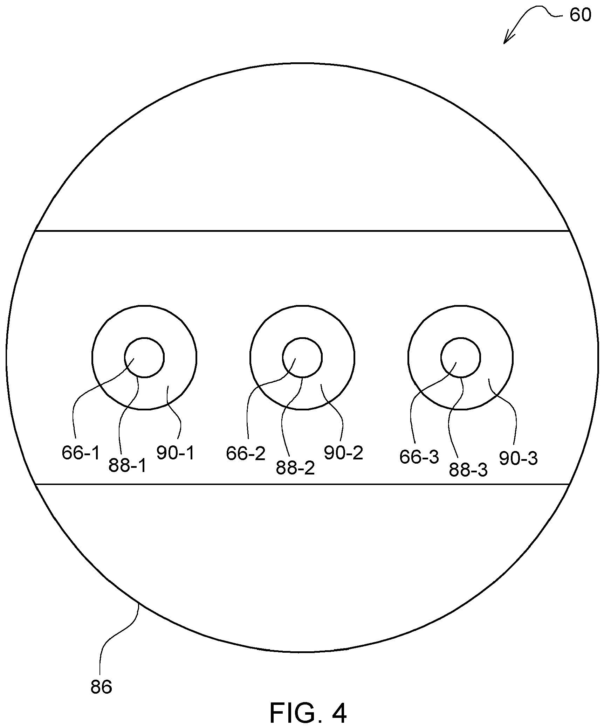

Das Luftfiltersystem 10 umfasst ein als Kunststoffspritzgussteil hergestelltes Filtergehäuse 14 mit einer Vielzahl stirnseitig angeordneter Lufteinlassöffnungen 16. An jede der Lufteinlassöffnungen 16 schließt sich ein jeweiliger Einzelabscheider 18 eines als Zentrifugalluftfilter 20 ausgebildeten Grobfilters 22 zur Vorreinigung von aus der Umgebung 24 angesaugter Luft an. Ein über einen Luftschlauch 26 mit einer Lüfterhutze 28 eines Hauptkühlaggregats 30 unterdruckseitig verbundener Anschlussstutzen 32 dient der Absaugung abgeschiedener Grobpartikel durch Erzeugung eines Unterdrucks gegenüber der Umgebung 24. Weitere Einzelheiten zum Aufbau des Zentrifugalluftfilters 20 werden in Zusammenhang mit Fig. 2 bzw. 4 beschrieben.

Wie in Fig. 1 weiterhin zu erkennen ist, befindet sich in einem den Lufteinlassöffnungen 16 abgewandten Gehäusebereich 34 ein seitlicher Luftauslassstutzen 36, aus dem der mittels des Luftfiltersystems 10 gereinigte Luftstrom über einen weiteren Luftschlauch 38 einem Turbolader eines Dieselmotors 40 zugeführt wird.

Beispielsgemäß ist das Filtergehäuse 14 innerhalb des Motorraums 12 mittels eines Montageflanschs 42 von vorne zugänglich in einem oberen Bereich eines Kühlerpakets 44 befestigt, durch das ein von dem Hauptkühlaggregat 30 erzeugter Kühlluftstrom 46 hindurchtritt. Das Filtergehäuse 14 ist mehrteilig aufgebaut und lässt sich bei Bedarf zum Zwecke der Reinigung zerlegen.

Fig. 2 zeigt eine schematische Schnittansicht eines ersten Ausführungsbeispiels des Luftfiltersystems 10 in Fig. 1.

Demgemäß umfasst das Luftfiltersystem 10 neben dem einlassseitigen Zentrifugalluftfilter 20 einen gleichfalls in dem Filtergehäuse 14 untergebrachten Feinfilter 48, der dem Zentrifugalluftfilter 20 in Filterbetriebsrichtung 50 des zu reinigenden Luftstroms 52 nachgeschaltet ist.

Jeder der Einzelabscheider 18 des Zentrifugalluftfilters 20 versetzt den hindurchtretenden Luftstrom 52 in eine definierte Wirbelbewegung, sodass im Luftstrom 52 enthaltene Grobpartikel aufgrund der hervorgerufenen Zentrifugalkräfte in einen die Einzelabscheider 18 umgebenden Sammelbereich 54 geschleudert und von dort über den Anschlussstutzen 32 nach außen abgesaugt und in die Umgebung 24 befördert werden.

Der Feinfilter 48 weist zur Vergrößerung der wirksamen Filteroberfläche ein gefaltetes bzw. plissiertes Filtervlies 56 auf, das in einem Patroneneinsatz 58 untergebracht ist. Der Patroneneinsatz 58 lässt sich durch Öffnen des Filtergehäuses 14 von Hand entnehmen und bei Bedarf durch einen neuen ersetzen.

Weiterhin ist dem Feinfilter 48 innerhalb des Filtergehäuses 14 in Filterbetriebsrichtung 50 redundant ein Sicherheitsfilter 60 nachgeschaltet. Der Sicherheitsfilter 60 verhindert, dass Schmutzpartikel, die bei einer Entnahme des Feinfilters 48 möglicherweise ins Filtergehäuse 14 freigesetzt werden, bei Wiederaufnahme des Filterbetriebs in nachgelagerte Komponenten gesaugt werden und diese unter Umständen beschädigen.

Eine in dem Filtergehäuse 14 untergebrachte Reinigungsanordnung 62 erlaubt ein Ausblasen von im Feinfilter 48 abgeschiedenen Schmutzpartikeln entgegen der Filterbetriebsrichtung 50. Die Reinigungsanordnung 62 weist eine in Richtung einer Filteroberfläche 64 des Feinfilters 48 gerichtete Luftauslassdüse 66 auf, die über eine zugehörige Versorgungsleitung 68 von einer Pressluftquelle 70 mit Druckluft speisbar ist. Die geometrischen Eigenschaften der Luftauslassdüse 66 sind derart gewählt, dass diese die Applikation eines flächigen Reinigungsluftstrahls 72 in Richtung der Filteroberfläche 64 ermöglicht. Die Pressluftquelle 70 ist Bestandteil eines Pneumatiksystems 74 des landwirtschaftlichen Traktors.

Die Luftauslassdüse 66 mündet in einen zwischen Feinfilter 48 und Sicherheitsfilter 60 ausgebildeten Gehäusekammerbereich 76 in Richtung der Filteroberfläche 64 des Feinfilters 48. Der durch Applizieren des Reinigungsluftstrahls 72 durchführbare Reinigungsvorgang beschränkt sich in diesem Fall ausschließlich auf den Feinfilter 48. Dies trägt dem Umstand Rechnung, dass eine Reinigung des Sicherheitsfilters 60 aufgrund der Möglichkeit unbemerkt verursachter Beschädigungen bzw. Undichtigkeiten im Falle erhöhter Reinheitsanforderungen unerwünscht ist.

Im einfachsten Fall erfolgt die Auslösung des Reinigungsvorgangs durch Betätigung der die Reinigungsanordnung 62 speisenden Pressluftquelle 70 manuell über ein mit einer Kontrolleinheit 78 verbundenes Bedienelement 80. Um dem Fahrer die Notwendigkeit der Durchführung des Reinigungsvorgangs anzuzeigen, steuert die Kontrolleinheit 78 eine Fahrerinformationseinheit 82 in Abhängigkeit von Daten einer Zeitablaufsteuerung und/oder einer Filterzustandserfassung an, um einen entsprechenden Fahrerhinweis 84 auszugeben. Zusätzlich oder alternativ erfolgt die Betätigung der Pressluftquelle 70 auf Grundlage dieser Daten seitens der Kontrolleinheit 78 automatisiert.

Im Ergebnis wird durch die Betätigung der Pressluftquelle 70 zumindest ein Teil der Schmutzpartikel aufgrund des mittels der Reinigungsanordnung 62 beim Ausblasen aufgebauten Luftdrucks von der Filteroberfläche 64 des Feinfilters 48 in Richtung des Grobfilters 22 und von dort in die Umgebung 24 befördert. Dies ermöglicht eine rasche und bequeme Reinigung des Feinfilters 48, ohne das Filtergehäuse 14 auseinanderzubauen zu müssen. Der solchermaßen durchgeführte Reinigungsvorgang erfolgt insbesondere unmittelbar nach dem Starten des landwirtschaftlichen Traktors vor Aufnahme des eigentlichen Fahrtbetriebs, sodass dieser zu keinen nennenswerten Ausfallzeiten bzw. Unterbrechungen im nachfolgenden Betriebsablauf führt.

Fig. 3 zeigt eine schematische Schnittansicht eines zweiten Ausführungsbeispiels des Luftfiltersystems 10 in Fig. 1.

Im Gegensatz zur ersten Ausführungsbeispiel ist die Luftauslassdüse 66 im vorliegenden Fall nicht als separates Bauteil ausgebildet, sondern erstreckt sich vielmehr durch den Sicherheitsfilter 60 hindurch in den Gehäusekammerbereich 76, um in diesen in Richtung der Filteroberfläche 64 des Feinfilters 48 zu münden. Die Luftauslassdüse 66 ist hierbei baulich in den Sicherheitsfilter 60 integriert. Hierzu weist der Sicherheitsfilter 60 ein Kunststoffgehäuse 86 mit einer Durchgangsöffnung 88 zur sitzdichten Aufnahme der Luftauslassdüse 66 auf. Die Unterbringung der Reinigungsanordnung 62 bzw. Luftauslassdüse 66 innerhalb des Filtergehäuses 14 ist in diesem Fall besonders raumsparend möglich, da der Gehäusekammerbereich 76 nicht die gesamte Luftauslassdüse 66 einschließlich der zugehörigen Versorgungsleitung 68 zur Pressluftzufuhr aufnehmen muss und daher entsprechend kompakt ausfallen kann.

In Fig. 2 und 3 ist der Luftauslassstutzen 36 aus Gründen der Darstellung jeweils am Stirnende des Gehäusebereichs 34 angeordnet. In der Praxis befindet sich dieser jedoch aufgrund der querverlaufenden Einbaulage des Luftfiltersystems 10 entsprechend Fig. 1 an der Seite des Gehäusebereichs 34.

Um die Flächenwirkung des Reinigungsluftstrahls 72 weiter zu verbessern, weist die Reinigungsanordnung 62 entsprechend der in Fig. 4 wiedergegebenen Weiterbildung nicht eine einzelne, sondern eine Vielzahl von über die Filteroberfläche 64 verteilt angeordneten Luftauslassdüsen 66-1, 66-2, 66-3 auf. Deren räumliche Anordnung ist dabei an den Verlauf (d.h. die Topografie) der Filteroberfläche 64 angepasst. Jede der Luftauslassdüsen 66-1, 66-2, 66-3 ist in einer eigenen Durchgangsöffnung 88-1, 88-2, 88-3 im Kunststoffgehäuse 86 des Sicherheitsfilters 60 aufgenommen und darin mittels eines Gummirings 90-1, 90-2, 90-3 gelagert bzw. abgedichtet. Abgesehen von der beispielhaft dargestellten Anordnung dreier Luftauslassdüsen 66-1, 66-2, 66-3 nebeneinander, kann auch eine beliebige andere Anzahl vorgesehen sein, wobei diese zudem in beliebiger anderer Formation, beispielsweise stern- oder kreisförmig, angeordnet sein können.

Der Vollständigkeit halber sei angemerkt, dass im Falle der vorstehend beschriebenen Ausführungsbeispiele anstelle eines Sicherheitsfilters 60 auch ein weiterer Feinfilter vorgesehen sein kann, der sich ebenfalls mittels der in dem Filtergehäuse 14 untergebrachten Reinigungsanordnung 62 ausblasen lässt. Dieser kann in einem eigenen Patroneneinsatz innerhalb des Filtergehäuses 14 untergebracht sein und ebenfalls ein gefaltetes bzw. plissiertes Filtervlies aufweisen. Die Luftauslassdüse 66 befindet sich in diesem Fall in einem dem weiteren Feinfilter nachgelagerten Gehäusekammerbereich 92.

## Patentansprüche

1. Luftfiltersystem für ein Nutzfahrzeug, umfassend einen in einem Filtergehäuse (14) untergebrachten einlassseitigen Grobfilter (22) sowie einen in Filterbetriebsrichtung (50) eines zu reinigenden Luftstroms (52) nachgeschalteten Feinfilter (48), wobei eine in dem Filtergehäuse (14) untergebrachte Reinigungsanordnung (62) zum Ausblasen von zumindest im Feinfilter (48) abgeschiedenen Schmutzpartikeln entgegen der Filterbetriebsrichtung (50) vorhanden ist, **dadurch gekennzeichnet, dass** dem Feinfilter (48) innerhalb des Filtergehäuses (14) in Filterbetriebsrichtung (50) redundant ein Sicherheitsfilter (60) nachgeschaltet ist.

2. Luftfiltersystem nach Anspruch 1, **dadurch gekennzeichnet, dass** die Reinigungsanordnung (62) eine in Richtung einer Filteroberfläche (64) des Feinfilters (48) gerichtete Luftauslassdüse (66; 66-1, 66-2, 66-3) aufweist, die von einer Pressluftquelle (70) speisbar ist.

3. Luftfiltersystem nach Anspruch 2, **dadurch gekennzeichnet, dass** die Reinigungsanordnung (62) eine Vielzahl von über die Filteroberfläche (64) verteilt angeordneten Luftauslassdüsen (66-1, 66-2, 66-3) aufweist.

4. Luftfiltersystem nach wenigstens einem der Ansprüche 1 bis 3, **dadurch gekennzeichnet, dass** es sich bei dem Grobfilter (22) um einen Zentrifugalluftfilter (20) zur Vorreinigung von aus der Umgebung (24) angesaugter Luft handelt.

5. Luftfiltersystem nach wenigstens einem der Ansprüche 1 bis 4, **dadurch gekennzeichnet, dass** der Feinfilter (48) zur Vergrößerung der wirksamen Filteroberfläche ein gefaltetes Filtervlies (56) aufweist, das in einem Patroneneinsatz (58) untergebracht ist.

6. Luftfiltersystem nach Anspruch 2, **dadurch gekennzeichnet, dass** die Luftauslassdüse (66; 66-1, 66-2, 66-3) in einen zwischen Feinfilter (48) und Sicherheitsfilter (60) ausgebildeten Gehäusekammerbereich (76) in Richtung der Filteroberfläche (64) des Feinfilters (48) mündet.

7. Luftfiltersystem nach Anspruch 6, **dadurch gekennzeichnet, dass** sich die Luftauslassdüse (66; 66-1, 66-2, 66-3) durch den Sicherheitsfilter (60) hindurch in den Gehäusekammerbereich (76) erstreckt.

8. Nutzfahrzeug, insbesondere landwirtschaftlicher Traktor, mit einem Luftfiltersystem (10) nach wenigstens einem der Ansprüche 1 bis 7.

## Claims

1. Air filter system for a commercial vehicle, comprising an inlet-proximal coarse filter (22) which is accommodated in a filter housing (14), and a fine filter (48) which is disposed downstream in the filter-operating direction (50) of an airflow (52) to be cleaned, wherein a cleaning assembly (52) for exhausting counter to the filter-operating direction at least dirt particles separated in the fine filter (48) is present in the filter housing (14), **characterized in that** a safety filter (60) is disposed downstream of the fine filter (48) so as to be redundant within the filter housing (14).

2. Air filter system according to Claim 1, **characterized in that** the cleaning assembly (62) has an air outlet nozzle (66; 66-1, 66-2, 66-3) which is directed in the direction of a filter surface (64) of the fine filter (48) and is able to be supplied by a compressed-air source (70).

3. Air filter system according to 2, **characterized in that** the cleaning assembly (62) has a multiplicity of air outlet nozzles (66-1, 66-2, 66-3) which are distributed across the filter surface (64).

4. Air filter system according to at least one of Claims 1 to 3, **characterized in that** the coarse filter (22) is a centrifugal air filter (20) for the preliminary cleaning of air inducted from the environment (24)

5. Air filter system according to at least one of Claims 1 to 4, **characterized in that** the fine filter (48) for enlarging the effective filter surface has a pleated non-woven filter (56) fabric which is accommodated in a cartridge insert (58).

6. Air filter system according to Claim 2, **characterized in that** the air outlet nozzle (66; 66-1, 66-2, 66-3) in a housing chamber region (76) configured between the fine filter (48) and the safety filter (60) opens out in the direction of the filter surface (64) of the fine filter (48).

7. Air filter system according to Claim 6, **characterized in that** the air outlet nozzle (66; 66-1, 66-2, 66-3) extends through the safety filter (60) into the housing chamber region (76).

8. Commercial vehicle, in particular an agricultural tractor, having an air filter system (10) according to at least one of Claims 1 to 7.

## Revendications

1. Système de filtre à air pour un véhicule utilitaire, comprenant un filtre grossier (22) côté admission disposé dans un boîtier de filtre (14) ainsi qu'un filtre fin (48) monté en aval dans la direction de filtration (50) d'un courant d'air (52) à épurer, un agencement d'épuration (62) disposé dans le boîtier de filtre (14) étant présent pour évacuer par soufflage des particules de saleté séparées au moins dans le filtre fin (48) à l'encontre de la direction de filtration (50), **caractérisé en ce qu'**un filtre de sécurité (60) est monté de manière redondante en aval du filtre fin (48) à l'intérieur du boîtier de filtre (14) dans la direction de filtration (50).

2. Système de filtre à air selon la revendication 1, **caractérisé en ce que** l'agencement d'épuration (62) présente une buse de sortie d'air (66 ; 66-1, 66-2, 66-3) dirigée en direction d'une surface filtrante (64) du filtre fin (48) et pouvant être alimentée par une source d'air comprimé (70).

3. Système de filtre à air selon la revendication 2, **caractérisé en ce que** l'agencement d'épuration (62) présente une pluralité de buses de sortie d'air (66-1, 66-2, 66-3) réparties sur la surface filtrante (64).

4. Système filtrat à air selon au moins l'une quelconque des revendications 1 à 3, **caractérisé en ce que** le filtre grossier (22) consiste en un filtre à air centrifuge (20) pour l'épuration préliminaire de l'air aspiré de l'environnement (24).

5. Système de filtre à air selon au moins l'une quelconque des revendications 1 à 4, **caractérisé en ce que** le filtre fin (48) présente un non-tissé filtrant plié (56), disposé dans une cartouche (58), pour augmenter la surface filtrante efficace.

6. Système de filtre à air selon la revendication 2, **caractérisé en ce que** la buse de sortie d'air (66 ; 66-1, 66-2, 66-3) débouche dans une zone de chambre de boîtier (76) réalisée entre le filtre fin (48) et le filtre de sécurité (60) en direction de la surface filtrante (64) du filtre fin (48).

7. Système de filtre à air selon la revendication 6, **caractérisé en ce que** la buse de sortie d'air (66 ; 66-1, 66-2, 66- 3) s'étend à travers le filtre de sécurité (60) dans la zone de chambre de boîtier (76).

8. Véhicule utilitaire, notamment tracteur agricole, avec un système de filtre à air (10) selon au moins l'une quelconque des revendications 1 à 7.
